# EUROPÄISCHE PATENTSCHRIFT

(11) **EP 4 116 688 B1**
(45) Veröffentlichungstag und Bekanntmachung des Hinweises auf die Patenterteilung: **06.11.2024**
(21) Anmeldenummer: 21183622.6
(22) Anmeldetag: 05.07.2021
(51) Int. Cl.: G01L 3/14

(54) **DREHMOMENTMESSUNG AN EINER SCHEIBE**
TORQUE MEASUREMENT ON A DISC
MESURE DE COUPLE D'UN DISQUE

(43) Veröffentlichungstag der Anmeldung: 11.01.2023
(73) Patentinhaber: NCTE AG, 82041 Oberhaching (DE)
(72) Erfinder: MUTZ, Robert, 82031 Grünwald (DE); ECKSCHLAGER, Florian, 85521 Riemerling (DE); MAYR, Bernhard, 81549 München (DE)
(74) Vertreter: Grünecker Patent- und Rechtsanwälte PartG mbB

(56) Entgegenhaltungen:
- DE-A1- 102012 024 264
- JP-A- 2016 027 318
- US-A1- 2014 260 686

## Beschreibung

### Gebiet der Erfindung

Die Erfindung betrifft einen Drehmomentsensor und ein Verfahren zur Herstellung eines solchen Drehmomentsensors.

### Stand der Technik

Gemäß Stand der Technik ist es häufig erwünscht, bei einem Antrieb im Zusammenhang mit einer Drehbewegung das wirkende Drehmoment zu ermitteln. Beispielsweise können Drehmomente in einem Tretlager eines E-Bikes basierend auf einer magnetisierten Welle des Tretlagers als Primärsensor und einem oder mehreren zugeordneten Magnetfeldsensoren nahe der Oberfläche der Welle als Sekundärsensor bestimmt werden, wie etwa in EP 3 050 790 B1 beschrieben. Dabei sind sowohl der Primär- als auch der Sekundärsensor im Innen des Tretlagers vorgesehen. Die Messung erfolgt berührungslos. Aufgrund des (inversen) magnetostriktiven Effekts wird außerhalb der magnetisierten Welle bei Anliegen eines Drehmoments ein Magnetfeld erzeugt, das abhängig vom aktuell anliegenden Drehmoment ist, weil die in der Welle wirkenden Scher- bzw. Torsionskräfte davon abhängen. Eine Messschaltung, die den Sekundärsensor umfasst, ermittelt aufgrund der Größe des erzeugten Magnetfelds das wirkende Drehmoment.

Angesichts des üblicherweise geringen verfügbaren Raums in solchen Tretlagern, insbesondere in Verbindung mit einem unterstützend antreibenden elektrischen Motor und dessen Ankopplung an das Tretlager, ist diese Lösung jedoch konstruktiv teilweise nur sehr aufwändig oder nicht in zufriedenstellender Weise hinsichtlich der Genauigkeit der Drehmomentmessung umzusetzen.

Ein anderes Gebiet, in dem die Messung von Drehmomenten mit eingeschränktem Raumangebot erfolgt, ist der Robotikbereich, wie beispielsweise in EP 3 232 172 B1 beschrieben. Auch dabei erfordert die Messung des Drehmoments mit magnetisierten Wellen und zugehörigen Magnetfeldsensoren teilweise hohen konstruktiven Aufwand.

US2014/260686A1 offenbart einen magnetostriktiven Drehmomentsensor.

### Beschreibung der Erfindung

Der Erfindung liegt die Aufgabe zugrunde, die genannten Nachteile zumindest teilweise auszuräumen.

Diese Aufgabe wird durch einen Drehmomentsensor nach Anspruch 1 gelöst.

Der erfindungsgemäße Drehmomentsensor umfasst eine Scheibe, die ein magnetostriktives, vormagnetisiertes oder magnetisierbares Material umfasst; und eine Magnetfeldsensoranordnung; wobei an die Scheibe ein um eine Drehachse der Scheibe wirkendes Drehmoment anlegbar ist und das magnetostriktive Material dazu ausgebildet ist, ein in Abhängigkeit von dem wirkenden Drehmoment veränderbares Magnetfeld außerhalb der Scheibe zu erzeugen; wobei die Magnetfeldsensoranordnung dazu ausgebildet ist, aufgrund des vom magnetostriktiven Materials erzeugten Magnetfelds ein Signal auszugeben; und wobei der Drehmomentsensor dazu ausgebildet ist, aufgrund des ausgegebenen Signals einen Wert des wirkenden Drehmoments zu ermitteln.

Erfindungsgemäß wird eine Scheibe, die als kraftübertragendes Element wirkt, zur Messung des anliegenden Drehmoments verwendet, indem die Scheibe vormagnetisiert wird (also insbesondere vor einem Einbau in einen Antrieb). Auf diese Weise wird die Scheibe und nicht eine Welle, an der die Scheibe angeordnet werden kann, als Primärsensor verwendet.

Dies hat konstruktiv den Vorteil, dass die Magnetfeldsensoranordnung (und möglicherweise notwendige zugehörige Elektronik) nicht an der Welle angeordnet werden muss, sondern außerhalb des Antriebs (beispielsweise Tretlager) vorgesehen werden kann. Weil die Oberfläche der magnetisierten Komponente damit effektiv um 90° gedreht werden kann, ergeben sich andere räumliche Möglichkeiten, die Magnetfeldsensoranordnung bereitzustellen.

In der Alternative, in der die Scheibe ein vormagnetisiertes Material umfasst, besteht eine permanente Magnetisierung magnetostriktiven Materials der Scheibe.

In der Alternative, in der die Scheibe ein magnetisierbares Material umfasst, kann weiterhin eine Magnetisierungsanordnung zum Magnetisieren des magnetostriktiven magnetisierbaren Materials über eine begrenzte Zeitdauer vorgesehen sein, so dass mit dem magnetostriktiven und so magnetisierten Material das in Abhängigkeit von dem wirkenden Drehmoment veränderbare Magnetfeld außerhalb der Scheibe erzeugbar ist. Dies stellt somit eine aktive Magnetisierung während der Drehmomenterfassung bereit, das Material muss nicht vormagnetisiert sein.

Die Scheibe ist um die Drehachse drehbar. Die Magnetfeldsensoranordnung ist erfindungsgemäß dabei synchron mit der Scheibe drehbar angeordnet, insbesondere drehfest damit verbunden sein. Dies hat den Vorteil, dass die Magnetfeldsensoren mit der Magnetisierung mitrotieren und Änderungen aufgrund einer Drehmomentänderung unmittelbar erfassen können. Dies ist besonders im Falle von radialen magnetisierten Verbindungsbereichen zwischen einem Innen- und einem Außenbereich der Scheibe vorteilhaft, da die Scherkräfte und somit resultierende Magnetfelder in dem bzw. den Verbindungsbereichen auftreten. Alternativ oder zusätzlich kann die Magnetisierungsanordnung dabei synchron mit der Scheibe drehbar angeordnet sein, insbesondere drehfest damit verbunden sein.

In einer anderen Weiterbildung kann die Magnetfeldsensoranordnung wenigstens eine elektrische Spule und/oder wenigstens einen AMR-Sensor umfassen. Insbesondere sind ein oder mehrere elektrische (Mess-) Spulen oder eine oder mehrere AMR-Sensoren in einer Messelektronik zur Erfassung des Magnetfelds bzw. dessen Änderung geeignet. AMR-Sensoren beruhen auf dem anisotropen magnetoresistiven Effekt.

Der Innenbereich, der Außenbereich und der wenigstens eine Verbindungsbereich können einstückig ausgebildet sein. Die Scheibe kann somit beispielsweise aus einer Vollscheibe aus Metall als Rohling hergestellt sein. Dieser Rohling kann durch Bearbeitungsschritte wie etwa Bohren in die endgültige Form gebracht werden.

Der wenigstens eine Verbindungsbereich kann Verbindungselemente und/oder Speichen und/oder Streben umfassen. Im Fall, dass der Innenbereich, der Außenbereich und der wenigstens eine Verbindungsbereich einstückig ausgebildet ist, sind zwischen den Verbindungselementen und/oder Speichen und/oder Streben Freiräume (Ausnehmungen aus der Vollscheibe) vorgesehen.

An den Innenbereich kann eine antreibende Kraft angelegt werden, wodurch der Innenbereich als Antriebsbereich und der Außenbereich als Abtriebsbereich wirkt. Alternativ dazu kann an den Außenbereich eine antreibende Kraft angelegt werden, wodurch der Außenbereich als Antriebsbereich und der Innenbereich als Abtriebsbereich wirkt.

Dabei kann der Innenbereich erste Kopplungsmittel zum Koppeln mit einem Antriebselement und der Außenbereich zweite Kopplungsmittel zum Koppeln mit einem Abtriebselement umfassen; oder der Innenbereich kann erste Kopplungsmittel zum Koppeln mit einem Abtriebselement und der Außenbereich zweite Kopplungsmittel zum Koppeln mit einem Antriebselement umfassen.

Ein Antriebslager, insbesondere ein Tretlager, gemäß der vorliegenden Erfindung umfasst einen erfindungsgemäßen Drehmomentsensor, wobei ein Kettenblattträger oder Kurbelstern des Antriebslagers als Scheibe des Drehmomentsensors ausgebildet ist. Die Magnetfeldsensoranordnung kann an einer Innenseite oder einer Außenseite der Scheibe in Bezug auf ein Tretlagergehäuse vorgesehen sein.

Eine Vorrichtung mit einem solchen Antriebslager kann ein Ergometer, ein E-Bike, ein Fahrrad oder ein Motorrad sein.

Eine Robotikvorrichtung gemäß der vorliegenden Erfindung umfasst einen erfindungsgemäßen Drehmomentsensor.

Die Erfindung stellt weiterhin eine Verfahren bereit, mit dem eine Scheibe magnetisiert werden kann, um sie in einem erfindungsgemäßen Drehmomentsensor einzusetzen. Die Scheibe kann insbesondere ein ohnehin erforderlicher Teil einer Antriebsvorrichtung sein. Durch die Magnetisierung kann die Scheibe eine zusätzliche Funktion in einem Drehmomentsensor erhalten.

Das Verfahren zur Magnetisierung einer Scheibe ist in Anspruch 12 definiert.

Dabei kann der Strom an einer oder an mehreren Stellen der Scheibe eingeleitet werden, und der Strom kann an einer oder an mehreren Stellen der Scheibe ausgeleitet werden.

Eine Weiterbildung besteht darin, dass Kontaktstellen einer Stromerzeugungsvorrichtung die Scheibe von einer der beiden Seiten der Scheibe kontaktieren oder wobei Kontaktstellen der Stromerzeugungsvorrichtung die Scheibe paarweise auf gegenüberliegenden Seiten kontaktieren.

Die Erfindung stellt weiterhin ein Verfahren zur Messung eines Drehmoments, wie in Anspruch 15 definiert.

Die Vorteile des erfindungsgemäßen Verfahrens entsprechen jenen, die in Bezug auf den erfindungsgemäßen Drehmomentsensor genannt wurden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine erste Ausführungsform eines Drehmomentsensors, der nicht in den Schutzbereich des Anspruchsatzes fällt.
- Fig. 2: zeigt eine zweite Ausführungsform des erfindungsgemäßen Drehmomentsensors.
- Fig. 3: zeigt eine dritte Ausführungsform des erfindungsgemäßen Drehmomentsensors.
- Fig. 4: zeigt eine vierte Ausführungsform des erfindungsgemäßen Drehmomentsensors.
- Fig. 5: veranschaulicht die Kontaktierung der Scheibe zur Magnetisierung.

### Ausführungsformen

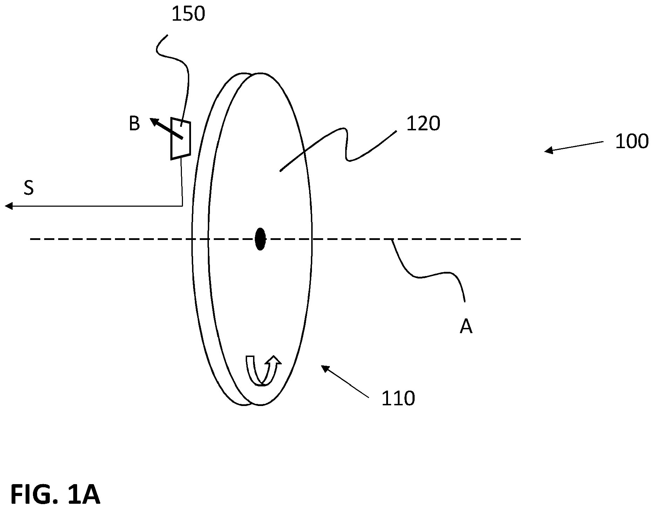

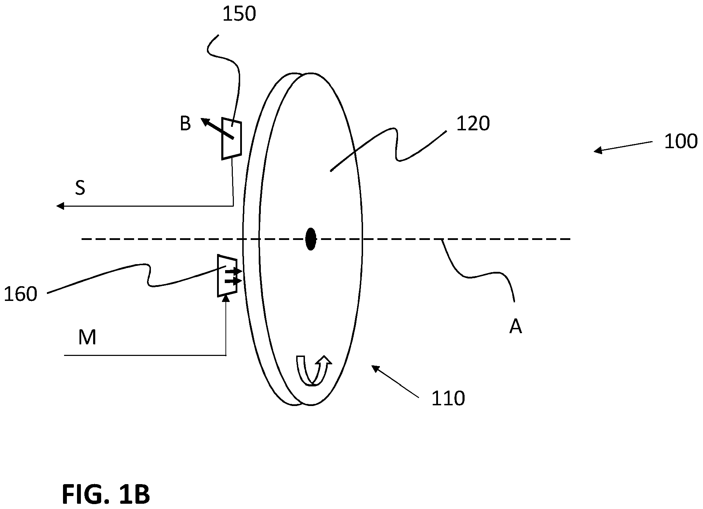

Figur 1 zeigt eine erste Ausführungsform eines Drehmomentsensors, die nicht in den Schutzbereich des Anspruchsatzes fällt.

Figur 1A zeigt dabei eine erste Variante der ersten Ausführungsform des Drehmomentsensor, die nicht in den Schutzbereich des Anspruchsatzes fällt.

Figur 1B zeigt dabei eine zweite Variante der ersten Ausführungsform des Drehmomentsensors, die nicht in den Schutzbereich des Anspruchsatzes fällt.

Der Drehmomentsensor 100 umfasst eine Scheibe 110, die ein magnetostriktives Material 120 und eine Magnetfeldsensoranordnung 150 umfasst. An die Scheibe 110 ist ein um eine Drehachse A der Scheibe 110 wirkendes Drehmoment anlegbar ist und das magnetostriktive Material 120 ist dazu ausgebildet, ein in Abhängigkeit von dem wirkenden Drehmoment veränderbares Magnetfeld B außerhalb der Scheibe 110 zu erzeugen; wobei die Magnetfeldsensoranordnung 150 dazu ausgebildet ist, aufgrund des erzeugten Magnetfelds B ein Signal S auszugeben. Der Drehmomentsensor 100 ermittelt aufgrund des ausgegebenen Signals S einen Wert des wirkenden Drehmoments, beispielsweise mittels einer Steuer- oder Auswerteeinheit.

In der Variante gemäß Figur 1A ist das magnetostriktive Material 120 vormagnetisiert. Ein Beispiel für magnetostriktives Material ist Eisen bzw. Eisenlegierungen, Stahl, etc. Die Magnetfeldsensoranordnung 150 kann eine oder mehrerer Messspulen oder einen oder mehrere AMR-Sensoren für die Erfassung des Magnetfelds B aufweisen. Die Magnetfeldsensoranordnung 150 ist hier ortsfest dargestellt, ist also nicht zusammen mit der Scheibe 110 um die Achse A drehbar vorgesehen. Dies ist sinnvoll, wenn sich bei einem gegebenen Drehmoment das Magnetfeld B am Ort der Magnetfeldsensoranordnung 150 innerhalb einer Drehung um die Achse A höchstens so ändert, dass es für die Ermittlung des Drehmoments nicht wesentlich ist. Hierbei kann es bei bestimmten Anwendungen auch möglich sein, eine Mittelung des Magnetfelds über eine gesamte Umdrehung der Scheibe vorzunehmen. AMR-Sensoren sind dahingehend vorteilhaft, dass Magnetfelder in mindestens einer oder mehreren Richtungen gemessen werden können, insbesondere kann auch in den 3 Raumachsen gemessen werden und das Magnetfeld in 3D erfasst werden. Eine, zwei oder drei Komponenten des Magnetfeldes können zur Ermittlung des Drehmoments verwendet werden.

In der Variante gemäß Figur 1B ist gegenüber der Variante gemäß Figur 1A zudem eine Magnetisierungsanordnung 160 zum Magnetisieren des magnetostriktiven magnetisierbaren Materials 120 über eine begrenzte Zeitdauer vorgesehen, so dass mit dem magnetostriktiven und so mit der Magnetisierungsanordnung 160 magnetisierten Material 120 das in Abhängigkeit von dem wirkenden Drehmoment veränderbare Magnetfeld B außerhalb der Scheibe 110 erzeugt werden. Eine Steuer-oder Auswerteeinheit kann ein entsprechendes Signal M an Magnetisierungsanordnung 160 senden, um die Magnetisierungsanordnung 160 zu aktivieren und damit ein Magnetfeld zu erzeugen, dass wiederum die Scheibe bzw. das magnetostriktive Material magnetisiert. Es handelt sich in diesem Fall um eine aktive Magnetfelderzeugung in der Scheibe während der Erfassung/Messung des Drehmoments. Die Magnetisierung ist in diesem Fall nicht permanent, sondern wird nur für eine gewisse Zeitdauer mittels der Magnetisierungsanordnung 160 bei einer jeweiligen Messung des Drehmoments erzeugt. Eine solche aktive Messung ist beispielsweise auch in EP 1 920 221 A1/B1 beschrieben.

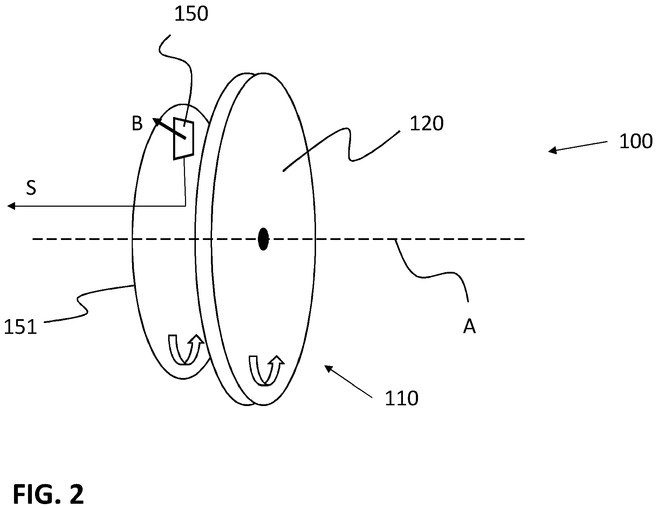

Figur 2 zeigt eine zweite Ausführungsform des erfindungsgemäßen Drehmomentsensors.

Der einzige Unterschied zur Ausführungsform gemäß Figur 1 besteht darin, dass die Magnetfeldsensoranordnung 150 synchron mit der Scheibe 110 mitrotiert. Dazu kann die Magnetfeldsensoranordnung 150 beispielsweise auf einem Trägerelement 151 angeordnet sein, welches wiederum mit der Scheibe 110 drehfest verbunden ist und sich somit zusammen mit der Scheibe 110 dreht. Dadurch erfolgt die Magnetfelderfassung durch die Magnetfeldsensoranordnung 150 immer an der gleichen Stelle der Scheibe 110. Mit der Variante gemäß Figur 1B kann dann auch die Magnetisierungsanordnung 160 synchron mitrotieren. Alternativ kann jedoch die Magnetisierungsanordnung 160 ortsfest sein, sich also nicht zusammen mit der Scheibe 110 um die Achse A drehen, sondern nur die Magnetfeldsensoranordnung 150 synchron mit der Scheibe 110 mitrotieren.

Die Ausgabe des Signals S kann in diesem Fall beispielsweise durch Schleifkontakte oder mittels einer berührungslosen, drahtlosen Verbindung erfolgen.

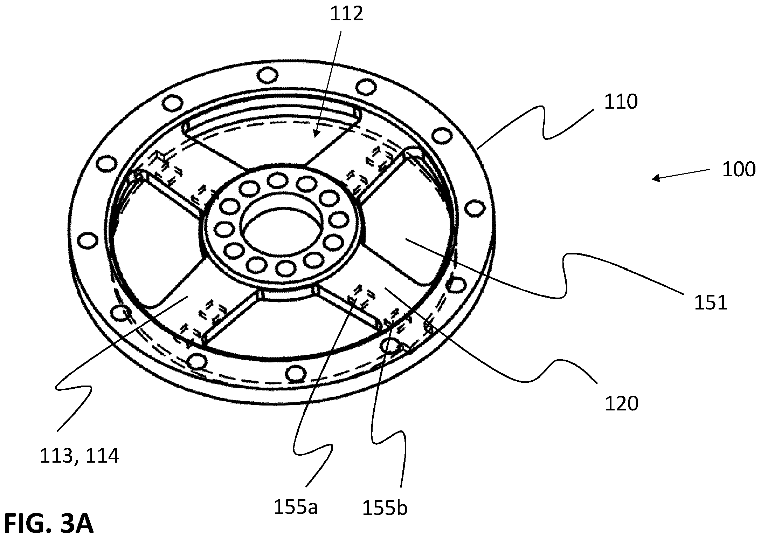

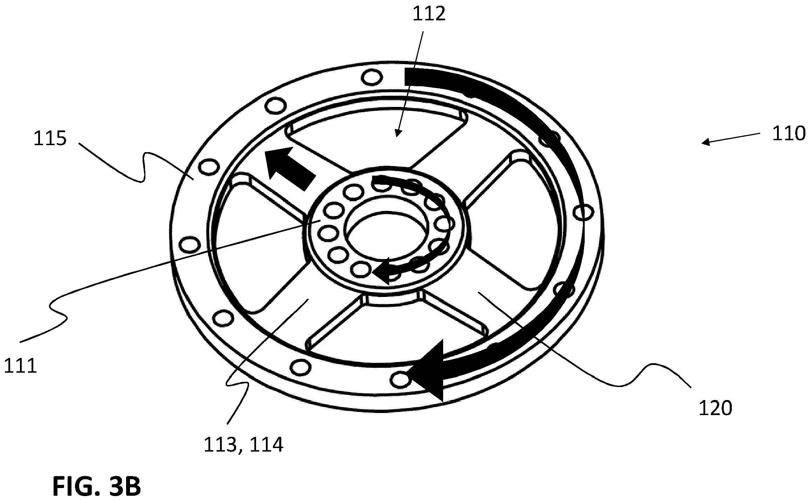

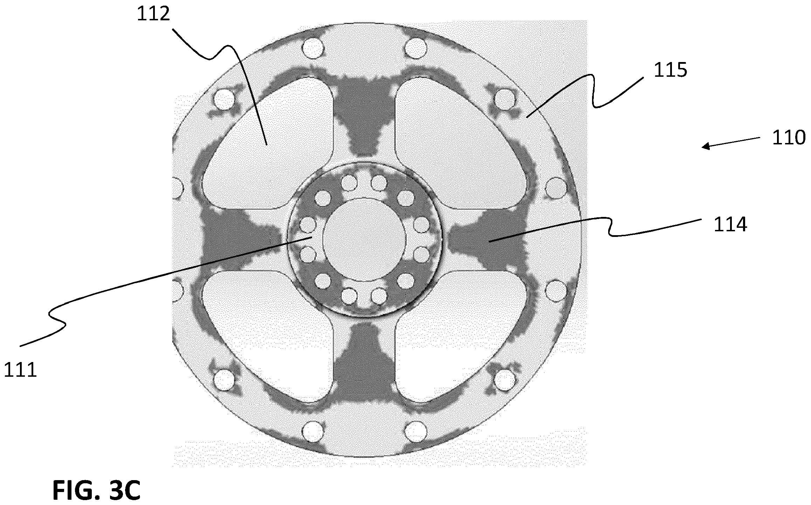

Figur 3 zeigt eine dritte Ausführungsform des erfindungsgemäßen Drehmomentsensors.

Dies entspricht der Ausführungsform gemäß Figur 2, wobei jedoch die Scheibe 110 keine homogene Vollscheibe ist, sondern freie Bereiche (Öffnungen) 112 aufweist, wobei eine oder mehrere radial von innen nach außen durchgehende Verbindungselemente 114 magnetisiert sind (in der Abbildung vier Verbindungselemente). Die Verbindungselemente 114 können Bereiche sein, die nach dem Einbringen von Aussparungen in die Scheibe 110 verbleiben, oder beispielsweise Streben oder Speichen. Die Magnetfeldsensoranordnung umfasst in diesem Beispiel gemäß Figur 3A Paare von Magnetfeldsensoren 155a, 155b (in der Abbildung vier Paare), die jeweils einem magnetisierten Verbindungselement zugeordnet sind.

Die Scheibe 110 weist einen Innenbereich 111, einen Außenbereich 115 und einen Verbindungsbereich 113 mit den Verbindungselementen 114 und den Öffnungen 112 auf.

Sowohl der Innenbereich 111 als auch der Außenbereich 115 ist mit Bohrungen versehen, mit denen eine Verbindung zu Antriebs- bzw. Abtriebselementen hergestellt werden kann.

Figur 3B zeigt einen Kraftfluss von innen nach außen, wenn der Innenbereich 111 mit einer Antriebseinrichtung verbunden ist und die Kraft über die Verbindungselemente 114 zum Außenbereich 115 übertragen wird und dort wiederum einer angetriebene Komponente zugeführt wird. Die Scheibe 110 kann beispielsweise ein Kettenblattträger eines Tretlagers sein, wobei der Innenbereich 111 durch Tretkurbeln angetrieben wird und das Drehmoment auf den Außenbereich 115 übertragen wird und dort weiter auf ein daran befestigtes Kettenblatt, um letztlich eine Kraft auf eine Antriebskette auszuüben.

Die auftretenden Spannungen sind in Figur 3C gemäß einer Simulation dargestellt. Diese Spannungen verursachen aufgrund des inversen magnetostriktiven Effekts eine Veränderung des Magnetfelds außerhalb der Scheibe und zeigen in den Verbindungselementen 114 eine hohe Variation mit dem Abstand vom Innenbereich 111.

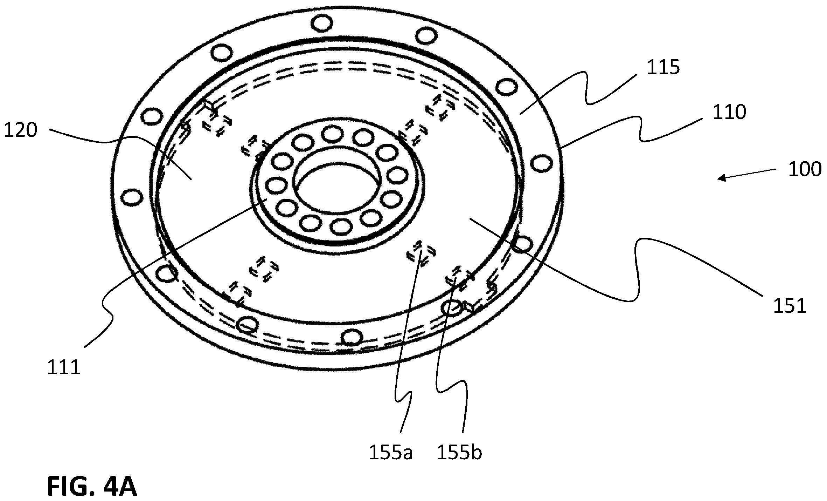

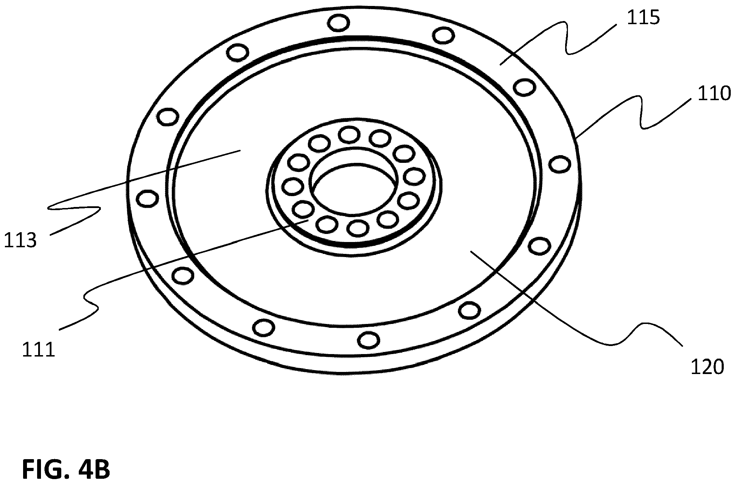

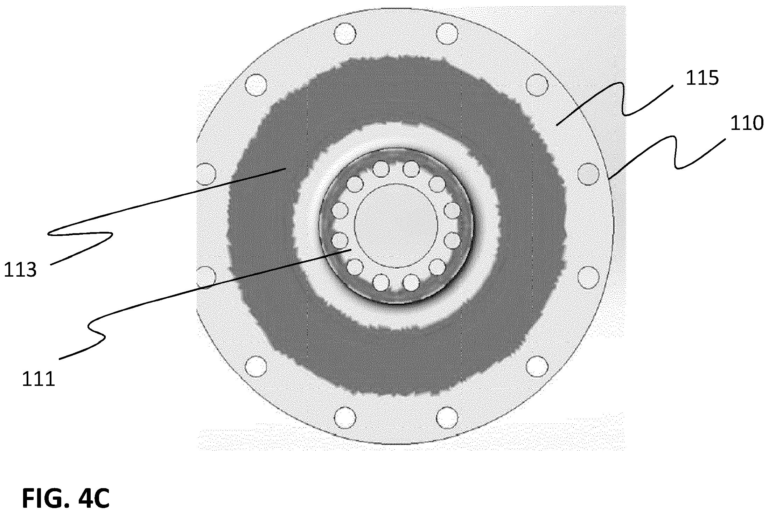

Figur 4 zeigt eine vierte Ausführungsform des erfindungsgemäßen Drehmomentsensors.

Die Ausführungsform der Figur 4 unterscheidet sich von jener gemäß Figur 3 lediglich dahingehend, dass im Verbindungsbereich 113 der Scheibe 110 keine Öffnungen vorhanden sind, es sich also im Wesentlichen (bis auf die Bohrungen) um eine Vollscheibe handelt.

Figur 4A zeigt die Scheibe 110 zusammen mit der Magnetfeldsensoranordnung 155a, 155b (Sekundärsensor). Figur 4B zeigt nur die magnetisierte Scheibe 110 (Primärsensor). Figur 4C zeigt den Spannungsverlauf entsprechend zu Fig. 3C.

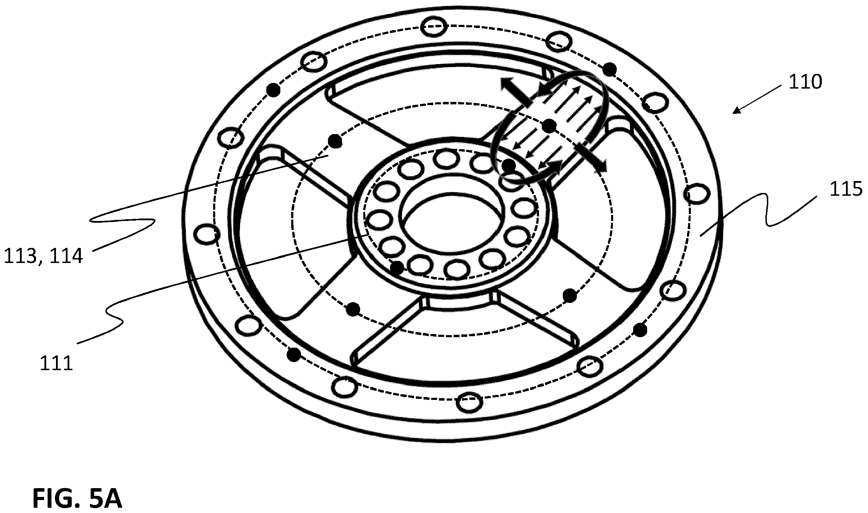

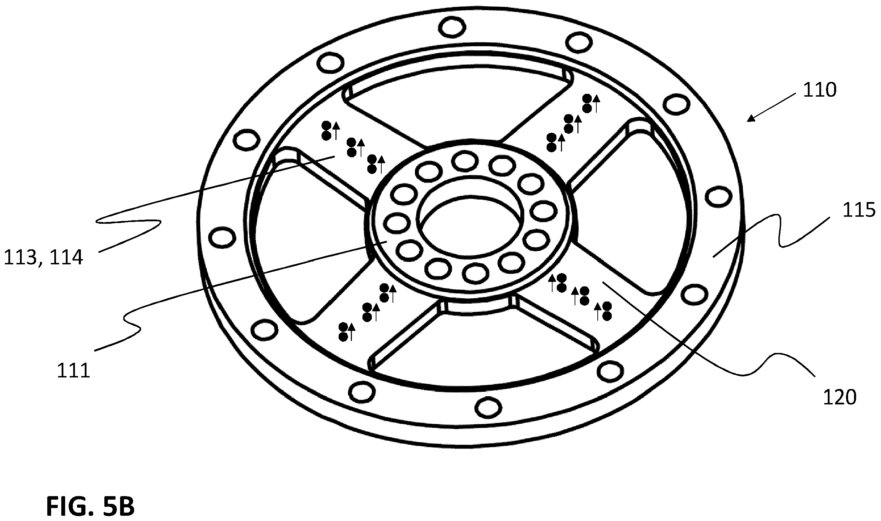

Figur 5 veranschaulicht die Kontaktierung der Scheibe zur Erzeugung einer permanenten Magnetisierung (Vormagnetisierung).

Das Verfahren gemäß Figur 5A zur Magnetisierung einer Scheibe 110, die ein magnetostriktives Material umfasst, wird wie folgt durchgeführt: Leiten eines elektrischen Stroms von einem Verbindungsbereich 113 bzw. eines Verbindungselements 114 (Kontaktpunkte z.B. auf der mittleren gestrichelten Linie), der zwischen einem in Bezug auf eine Drehachse achsennahen Innenbereich 111 und einem achsenfernen Außenbereich 115 der Scheibe 110 vorgesehen ist, zu dem Innenbereich 111 (Kontaktpunkte z.B. auf der inneren gestrichelten Linie) und/oder dem Außenbereich 115 (Kontaktpunkte z.B. auf der äußeren gestrichelten Linie). Dabei ist der Stromfluss durch die parallelen Pfeile gekennzeichnet, der ein durch die gebogenen Pfeile gekennzeichnetes Magnetfeld erzeugt, welches hinreichend stark ist, eine permanente Magnetisierung des magnetostriktiven Materials 120 zu bewirken.

Zusätzlich oder alternativ kann das Leiten des elektrischen Stroms von einer ersten Seite der Scheibe zu einer in axialer Richtung gegenüberliegenden zweiten Seite der Scheibe erfolgen, wie in Figur 5B dargestellt. Die Doppelpunkte stellen jeweils einen Kontaktpunkt von unten und einen Kontaktpunkt von oben dar. Der Strom fließt dabei in Pfeilrichtung durch das magnetostriktive Material 120.

Gemäß Figur 5A wird die Scheibe im Verbindungsbereich von einer oder mehreren Elektroden kontaktiert, die beispielsweise mit dem Pluspol einer Spannungsquelle verbunden ist/sind. Weiterhin kann die Scheibe in dieser Ausführungsform sowohl im Innenbereich als auch im Außenbereich von einer oder mehreren Elektroden kontaktiert werden, die beispielsweise mit dem Minuspol der Spannungsquelle verbunden ist/sind. Die Polarität kann auch umgekehrt sein.

Alternativ kann die Kontaktierung auch nur im Innen- oder Außenbereich erfolgen. Die Elektroden der Spannungsquelle (Stromerzeugungsvorrichtung) kontaktieren die Scheibe an Kontaktstellen beispielsweise auf einer der beiden Seiten der Scheibe.

Dabei kann der Strom an einer oder an mehreren Stellen der Scheibe eingeleitet werden, und der Strom kann an einer oder an mehreren Stellen der Scheibe ausgeleitet werden.

Gemäß der Ausführungsform nach Figur 5B kontaktieren die Elektroden der Stromerzeugungsvorrichtung/Spannungsquelle die Scheibe an Kontaktstellen auf paarweise gegenüberliegenden Seiten.

Der Stromfluss (bzw. die angelegte Spannung) kann dabei vorzugsweise pulsierend erfolgen. Auf diese Weise kann (kurzfristig) ein sehr hoher Strom mit einem entsprechend hohen Magnetfeld erzeugt werden. Die gepulste Magnetisierung von Wellen zur Nutzung in der magnetostriktiven Messtechnik für die Drehmomentmessung ist z.B. in EP 1 774 271 B1 und EP 1 902 287 B1 beschrieben. Dieses Verfahren ist unter der Bezeichnung "Puls Current Magnetic Encoding (PCME)" bekannt.

Die dargestellten Ausführungsformen sind lediglich beispielhaft und der vollständige Umfang der vorliegenden Erfindung wird durch die Ansprüche definiert.

## Patentansprüche

1. Drehmomentsensor (100), umfassend:
eine Scheibe (110), die ein magnetostriktives Material (120) umfasst, das vormagnetisiert oder magnetisierbar ist; und
eine Magnetfeldsensoranordnung (150);
wobei an die Scheibe ein um eine Drehachse (A) der Scheibe wirkendes Drehmoment anlegbar ist und das magnetostriktive Material dazu ausgebildet ist, ein in Abhängigkeit von dem wirkenden Drehmoment veränderbares Magnetfeld außerhalb der Scheibe zu erzeugen;
wobei die Magnetfeldsensoranordnung (150) dazu ausgebildet ist, aufgrund des vom magnetostriktiven Materials erzeugten Magnetfelds ein Signal auszugeben; und
wobei der Drehmomentsensor dazu ausgebildet ist, aufgrund des ausgegebenen Signals einen Wert des wirkenden Drehmoments zu ermitteln;
**dadurch gekennzeichnet, dass**
die Magnetfeldsensoranordnung (150) synchron mit der Scheibe (110) drehbar angeordnet ist.

2. Drehmomentsensor nach Anspruch 1, weiterhin umfassend:
eine Magnetisierungsanordnung (160) zum Magnetisieren des magnetostriktiven magnetisierbaren Materials über eine begrenzte Zeitdauer, so dass mit dem magnetostriktiven und so magnetisierten Material das in Abhängigkeit von dem wirkenden Drehmoment veränderbare Magnetfeld außerhalb der Scheibe erzeugbar ist.

3. Drehmomentsensor nach Anspruch 2, wobei die Magnetisierungsanordnung synchron mit der Scheibe drehbar angeordnet ist oder wobei die Magnetisierungsanordnung in Bezug auf die durch die Drehachse vorgegebene Drehrichtung fest angeordnet ist.

4. Drehmomentsensor nach einem der Ansprüche 1 bis 3, wobei die Magnetfeldsensoranordnung wenigstens eine elektrische Spule und/oder wenigstens einen AMR-Sensor umfasst.

5. Drehmomentsensor nach einem der Ansprüche 1 bis 4, wobei die Scheibe einen achsennahen Innenbereich (111) und einen achsenfernen Außenbereich (115) aufweist, wobei der Innenbereich und der Außenbereich durch wenigstens einen Verbindungsbereich (113) verbunden sind, und wobei der wenigstens eine Verbindungsbereich wenigstens einen Teil des magnetostriktiven Materials umfasst.

6. Drehmomentsensor nach Anspruch 5, wobei der Innenbereich, der Außenbereich und der wenigstens eine Verbindungsbereich einstückig ausgebildet sind.

7. Drehmomentsensor nach Anspruch 5 oder 6, wobei der wenigstens eine Verbindungsbereich Verbindungselemente (114) und/oder Speichen und/oder Streben umfasst.

8. Drehmomentsensor nach einem der Ansprüche 5 bis 7, wobei an den Innenbereich eine antreibende Kraft anlegbar ist, wodurch der Innenbereich als Antriebsbereich und der Außenbereich als Abtriebsbereich wirkt, oder wobei an den Außenbereich eine antreibende Kraft anlegbar ist, wodurch der Außenbereich als Antriebsbereich und der Innenbereich als Abtriebsbereich wirkt.

9. Drehmomentsensor nach Anspruch 8, wobei der Innenbereich erste Kopplungsmittel zum Koppeln mit einem Antriebselement und der Außenbereich zweite Kopplungsmittel zum Koppeln mit einem Abtriebselement umfasst; oder wobei der Innenbereich erste Kopplungsmittel zum Koppeln mit einem Abtriebselement und der Außenbereich zweite Kopplungsmittel zum Koppeln mit einem Antriebselement umfasst.

10. Antriebslager, insbesondere ein Tretlager, umfassend:
einen Drehmomentsensor nach einem der Ansprüche 1 bis 9, wobei ein Kettenblattträger oder Kurbelstern des Antriebslagers als Scheibe des Drehmomentsensors ausgebildet ist, insbesondere wobei die Magnetfeldsensoranordnung an einer Innenseite oder einer Außenseite der Scheibe in Bezug auf ein Tretlagergehäuse vorgesehen ist.

11. Vorrichtung, umfassend ein Antriebslager nach Anspruch 10, wobei die Vorrichtung ein Ergometer, ein E-Bike, ein Fahrrad oder ein Motorrad ist; oder umfassend einen Drehmomentsensor nach einem der Ansprüche 1 bis 9, wobei die Vorrichtung eine Robotikvorrichtung ist.

12. Verfahren zur Magnetisierung einer Scheibe (110) eines Dremomentsensors nach einem der Ansprüche 5-9, wobei das Verfahren die folgenden Schritte umfasst:
Leiten eines elektrischen Stroms von dem Verbindungsbereich (113), der zwischen dem in Bezug auf eine Drehachse achsennahen Innenbereich (113) und dem achsenfernen Außenbereich (115) der Scheibe vorgesehen ist, zu dem Innenbereich (113) und/oder dem Außenbereich (115); und/oder
Leiten eines elektrischen Stroms von dem Innenbereich (111) über den Verbindungsbereich (113) zum Außenbereich (115) oder in umgekehrter Richtung.

13. Verfahren nach Anspruch 12, wobei der Strom an einer oder an mehreren Stellen der Scheibe eingeleitet wird, und wobei der Strom an einer oder an mehreren Stellen der Scheibe ausgeleitet wird; und/oder
wobei das Leiten des elektrischen Stroms von einer ersten Seite der Scheibe zu einer in axialer Richtung gegenüberliegenden zweiten Seite der Scheibe erfolgt.

14. Verfahren nach Anspruch 12 oder 13, wobei Kontaktstellen einer Stromerzeugungsvorrichtung die Scheibe von einer der beiden Seiten der Scheibe kontaktieren oder wobei Kontaktstellen der Stromerzeugungsvorrichtung die Scheibe paarweise auf gegenüberliegenden Seiten kontaktieren.

15. Verfahren zur Messung eines Drehmoments, umfassend:
Bereitstellen einer um eine Drehachse drehbaren Scheibe (110), die ein vormagnetisiertes oder magnetisierbares magnetostriktives Material umfasst;
Anlegen eines um die Drehachse wirkenden Drehmoments an die Scheibe; Erzeugen eines Magnetfeld außerhalb der Scheibe mit dem magnetostriktiven Material, wobei das erzeugte Magnetfeld in Abhängigkeit von dem wirkenden Drehmoment variiert;
Ausgeben eines Signals mit einer Magnetfeldsensoranordnung (150) aufgrund des erzeugten Magnetfelds; und
Ermitteln eines Werts des wirkenden Drehmoments aufgrund des ausgegebenen Signals;
wobei im Fall eines magnetisierbaren magnetostriktiven Materials vor dem Anlegen des um die Drehachse wirkenden Drehmoments an die Scheibe der folgende weitere Schritt durchgeführt wird: Magnetisieren des magnetisierbaren magnetostriktiven Materials über eine begrenzte Zeitdauer;
**dadurch gekennzeichnet, dass**
die Magnetfeldsensoranordnung (150) synchron mit der Scheibe (110) drehbar angeordnet wird.

## Claims

1. Torque sensor (100) comprising:
a disk (110) comprising a magnetostrictive material (120) that is magnetically biased or magnetizable; and
a magnetic field sensor assembly (150);
where a torque acting about an axis (A) of rotation of said disk can be applied to said disk and said magnetostrictive material is configured to generate a magnetic field outside said disk that changes dependent on the acting torque;
where said magnetic field sensor assembly (150) is configured to output a signal based on said magnetic field generated by said magnetostrictive material; and
where said torque sensor is configured to determine a value of said acting torque based on said signal that is output;
**characterized in that**
the magnetic field sensor assembly (150) is arranged to be co-rotatable synchronously with said disk (110).

2. Torque sensor according to claim 1, further comprising:
a magnetization assembly (160) for magnetizing said magnetostrictive magnetizable material over a limited period of time so that said magnetic field, which changes dependent on the acting torque, can be generated outside said disk with said magnetostrictive and thus magnetized material.

3. Torque sensor according to claim 2, where said magnetization assembly is arranged to be co-rotatable synchronously with said disk or where said magnetization assembly is arranged fixedly with respect to the direction of rotation predetermined by the axis of rotation.

4. Torque sensor according to one of the claims 1 to 3, where said magnetic field sensor assembly comprises at least one electric coil and/or at least one AMR sensor.

5. Torque sensor according to one of the claims 1 to 4, where said disk has an inner region (111) in proximity to the axis and an outer region (115) remote from the axis, where said inner region and said outer region are connected by at least one connection region (113), and where said at least one connection region comprises at least part of said magnetostrictive material.

6. Torque sensor according to claim 5, where said inner region, said outer region, and said at least one connection region are formed integrally.

7. Torque sensor according to claim 5 or 6, where said at least one connection region comprises connection elements (114) and/or spokes and/or struts.

8. Torque sensor according to one of the claims 5 to 7, where a driving force can be applied to said inner region, whereby said inner region acts as a driving region and said outer region acts as a driven region, or where a driving force can be applied to said outer region, whereby said outer region acts as a driving region and said inner region acts as a driven region.

9. Torque sensor according to claim 8, where said inner region comprises first coupling means for coupling to a drive element and said outer region comprises second coupling means for coupling to a driven element; or where said inner region comprises first coupling means for coupling to a driven element and said outer region comprises second coupling means for coupling to a drive element.

10. Drive bearing, in particular a bottom bracket, comprising:
a torque sensor according to one of the claims 1 to 9, where a chainring carrier or crank star of said drive bearing is formed as said disk of said torque sensor, in particular where said magnetic field sensor assembly is provided in relation to a bottom bracket casing on an inner side or an outer side of said disk.

11. Device comprising a drive bearing according to claim 10, where said device is an ergometer, an e-bike, a bicycle or a motorcycle; or comprising a torque sensor according to one of the claims 1 to 9, where said device is a robotic device.

12. Method for magnetizing a disk (110) of a torque sensor according to one of claims 5-9, the method comprising the following steps:
conducting an electrical current from the connection region (113), provided between the inner region (113) which with respect to an axis of rotation is in proximity to said axis and/or an outer region (115) of said disk which is remote from said axis, to said inner region (113) and/or said outer region (115); and/or
conducting an electrical current from said inner region (111) via said connection region (113) to said outer region (115), or in the opposite direction.

13. Method according to claim 12, where the current is fed in at one or more points of said disk and where the current is fed out at one or more points of said disk; and/or
where the electrical current is conducted from a first side of said disk to an axially opposite second side of said disk.

14. Method according to claim 12 or 13, where contact points of a power generating device contact said disk from one of said two sides of said disk or where contact points of said power generating device contact said disk in pairs on oppositely disposed sides.

15. Method for measuring torque, comprising:
providing a disk (110) which is rotatable about an axis of rotation, comprising a magnetically biased or magnetizable magnetostrictive material;
applying a torque that acts about the axis of rotation to said disk; generating a magnetic field outside said disk with said magnetostrictive material, where the magnetic field generated varies dependent on the acting torque;
outputting a signal with a magnetic field sensor assembly (150) based on the magnetic field generated; and
determining a value of the acting torque based on said signal that is output;
where the following further step is performed in the case of a magnetizable magnetostrictive material prior to applying the torque acting about said axis of rotation to said disk:
magnetizing said magnetizable magnetostrictive material for a limited period of time;
**characterized in that**
the magnetic field sensor assembly (150) is arranged to be co-rotatable synchronously with said disk (110).

## Revendications

1. Capteur de couple (100), comprenant :
un disque (110) comprenant un matériau magnétostrictif (120) qui est prémagnétisé ou magnétisable ; et
un agencement de capteurs de champ magnétique (150) ;
dans lequel un couple agissant autour d'un axe de rotation (A) du disque peut être appliqué au disque, et le matériau magnétostrictif est conçu pour générer à l'extérieur du disque un champ magnétique modifiable en fonction du couple agissant ;
dans lequel l'agencement de capteurs de champ magnétique (150) est conçu pour émettre un signal sur la base du champ magnétique généré par le matériau magnétostrictif ; et
dans lequel le capteur de couple est conçu pour déterminer une valeur du couple agissant sur la base du signal émis ;
**caractérisé en ce que** l'agencement de capteurs de champ magnétique (150) est agencé de manière rotative et synchrone avec le disque (110).

2. Capteur de couple selon la revendication 1, comprenant en outre :
un agencement de magnétisation (160) pour magnétiser le matériau magnétisable magnétostrictif sur une période limitée, de telle sorte que le champ magnétique modifiable en fonction du couple agissant puisse être généré à l'extérieur du disque avec le matériau magnétostrictif et ainsi magnétisé.

3. Capteur de couple selon la revendication 2, dans lequel l'agencement de magnétisation est agencé de manière rotative et synchrone avec le disque, ou dans lequel l'agencement de magnétisation est agencé de manière fixe par rapport au sens de rotation prédéterminé par l'axe de rotation.

4. Capteur de couple selon l'une des revendications 1 à 3, dans lequel l'agencement de capteurs de champ magnétique comprend au moins une bobine électrique et/ou au moins un capteur à magnétorésistance anisotrope.

5. Capteur de couple selon l'une des revendications 1 à 4, dans lequel le disque présente une zone interne (111) proche de l'axe et une zone externe (115) éloignée de l'axe, dans lequel la zone interne et la zone externe sont connectées par au moins une zone de connexion (113), et dans lequel ladite au moins une zone de connexion comprend au moins une partie du matériau magnétostrictif.

6. Capteur de couple selon la revendication 5, dans lequel la zone interne, la zone externe et ladite au moins une zone de connexion sont formées d'une seule pièce.

7. Capteur de couple selon la revendication 5 ou 6, dans lequel ladite au moins une zone de connexion comprend des éléments de connexion (114) et/ou des rayons et/ou des entretoises.

8. Capteur de couple selon l'une des revendications 5 à 7, dans lequel une force d'entraînement peut être appliquée à la zone interne, moyennant quoi la zone interne agit comme une zone d'entraînement et la zone externe agit comme une zone entraînée, ou dans lequel une force d'entraînement peut être appliquée à la zone externe, moyennant quoi la zone externe agit comme une zone d'entraînement et la zone interne agit comme une zone entraînée.

9. Capteur de couple selon la revendication 8, dans lequel la zone interne comprend un premier moyen de couplage pour se coupler à un élément d'entraînement et la zone externe comprend un deuxième moyen de couplage pour se coupler à un élément entraîné ; ou dans lequel la zone interne comprend un premier moyen de couplage pour se coupler à un élément entraîné et la zone externe comprend un deuxième moyen de couplage pour se coupler à un élément d'entraînement.

10. Palier d'entraînement, en particulier palier de pédalier, comprenant :
un capteur de couple selon l'une des revendications 1 à 9, dans lequel un support de plateau ou une étoile de manivelle du palier d'entraînement est conçu comme un disque du capteur de couple, en particulier dans lequel l'agencement de capteurs de champ magnétique est pourvu côté intérieur ou côté extérieur du disque par rapport à un boîtier de palier de pédalier.

11. Dispositif comprenant un palier d'entraînement selon la revendication 10, dans lequel le dispositif est un ergomètre, un vélo électrique, un vélo ou une moto ; ou comprenant un capteur de couple selon l'une des revendications 1 à 9, dans lequel le dispositif est un dispositif robotique.

12. Procédé de magnétisation d'un disque (110) d'un capteur de couple selon l'une des revendications 5 à 9, dans lequel le procédé comprend les étapes suivantes :
conduction d'un courant électrique depuis la zone de connexion (113), qui est pourvue, par rapport à un axe de rotation, entre la zone interne (113) proche de l'axe et la zone externe (115) éloignée de l'axe du disque, jusqu'à la zone interne (113) et/ou la zone externe (115) ; et/ou
conduction d'un courant électrique depuis la zone interne (111) via la zone de connexion (113) jusqu'à la zone externe (115) ou dans la direction opposée.

13. Procédé selon la revendication 12, dans lequel le courant est introduit à un ou plusieurs emplacements sur le disque, et dans lequel le courant est déchargé à un ou plusieurs emplacements sur le disque ; et/ou
dans lequel le courant électrique est conduit depuis un premier côté du disque jusqu'à un deuxième côté du disque opposé en direction axiale.

14. Procédé selon la revendication 12 ou 13, dans lequel les points de contact d'un dispositif générateur de courant entrent en contact avec le disque depuis l'un des deux côtés du disque, ou dans lequel les points de contact du dispositif générateur de courant entrent en contact avec le disque par paires sur des côtés opposés.

15. Procédé de mesure d'un couple, comprenant :
la fourniture d'un disque (110) rotatif autour d'un axe de rotation et comprenant un matériau magnétostrictif prémagnétisé ou magnétisable ;
l'application au disque d'un couple agissant autour de l'axe de rotation ;
la génération d'un champ magnétique à l'extérieur du disque avec le matériau magnétostrictif, dans lequel le champ magnétique généré varie en fonction du couple agissant ;
l'émission d'un signal avec un agencement de capteurs de champ magnétique (150) sur la base du champ magnétique généré ; et
la détermination d'une valeur du couple agissant sur la base du signal émis ;
dans lequel, dans le cas d'un matériau magnétostrictif magnétisable, avant d'appliquer au disque le couple agissant autour de l'axe de rotation, l'étape supplémentaire suivante est réalisée : magnétisation du matériau magnétostrictif magnétisable pendant une période limitée ;
**caractérisé en ce que** l'agencement de capteurs de champ magnétique (150) est agencé de manière rotative et synchrone avec le disque (110).
